# EUROPEAN PATENT APPLICATION

(11) **EP 2 950 242 A1**
(43) Date of publication of application: **02.12.2015**
(21) Application number: 15163358.3
(22) Date of filing: 13.04.2015
(51) Int. Cl.: G06Q 10/00, G01C 21/32

(54) **METHOD AND APPARATUS FOR DETERMINING POSITION**

(30) Priority: 30.05.2014 CN 201410240113
(71) Applicant: Xiaomi Inc., Beijing 100085 (CN)
(72) Inventor: Pan, Jun, Haidian District Beijing (CN); Qi, Yuhang, Haidian District Beijing (CN); Jiang, Dailin, Haidian District Beijing (CN)
(74) Representative: Hanna, Peter William Derek

(57) **Abstract**

The present disclosure provides a method and an apparatus for determining a position, which belongs to the field of computer technology. The method includes: when a position request of a designated application is detected, acquiring (101) a local position coordinate through a positioning function; querying (102) a designated region to which the position coordinate belongs, in pre-stored corresponding relationships between position coordinate ranges and designated regions; and responding (103) to the position request of the designated application according to the designated region to which the position coordinate belongs. As compared to the technology in the related prior art in which the position coordinate is sent to a third party application to determine a specific position, in the embodiment of the present disclosure, the position request of the designated application may be responded without calling a third party application or accessing a network, thereby improving the efficiency in responding to the position request of the designated application.

## Description

### TECHNICAL FIELD

The present disclosure generally relates to a field of computer technology, and more particularly to a method and an apparatus for determining a position.

### BACKGROUND

With the development of computer technology and positioning technology, an increasing number of non-map applications are offering location-based services for users by acquiring positions of terminals.

Conventionally, a non-map application acquires a current position coordinate of a terminal by calling a positioning function in the terminal, and sends the position coordinate with a position request to a third party application through an opening API (Application Programming Interface) reserved for the third party application. Then the third party application sends the position coordinate to a server for a map application over a network, to query the position. Finally, the third party application returns the position returned by the server as a corresponding result to the non-map application. Then the non-map application provides a position-related service to the user according to the acquired position.

It is found by the applicant that at least the following deficiency exists in the related prior art:
In querying the position, it is required to call a third party application, and it is required to perform an inquiry over a network, whereby, network resources may be occupied, and on the other hand, if the network condition is not good enough, much time for the querying process will be taken.

As compared to the technology in the related prior art in which the position coordinate is sent to a third party application to determine a specific position, in the present invention, the position request of the designated application may be responded without calling a third party application or accessing a network, thereby improving efficiency in responding to the position request of the designated application.

### SUMMARY

In order to solve the problems in the related prior art, the present invention provides a method and an apparatus for determining a position in accordance with claims which follow. The technical solutions are as follows.

According to a first aspect of embodiments of the present disclosure, there is provided a method for determining a position, comprising:
detecting a position request of a designated application, and acquiring a local position coordinate through a positioning function;
determining a designated region to which the position coordinate belongs, in pre-stored corresponding relationships between position coordinate ranges and determined designated regions; and
responding to the position request of the designated application according to the designated region to which the position coordinate belongs.

In conjunction with the first aspect of the embodiments of the present disclosure, in a first possible implementation, the determining a designated region to which the position coordinate belongs, in pre-stored corresponding relationships between position coordinate ranges and respective designated regions, comprises:

identifying a range of position coordinate to which the position coordinate belongs, in pre-stored corresponding relationships between position coordinate ranges and designated regions, and determining the designated region to which the position coordinate belongs according to the identified range of position coordinates.

In conjunction with the first aspect of the embodiments of the present disclosure, in a second possible implementation, the responding to the position request of the designated application according to the designated region to which the position coordinate belongs, comprises:
returning the determined designated region to which the position coordinate belongs, as a result of the position request of the designated application, to the designated application.

In conjunction with the first aspect of the embodiments of the present disclosure, in a third possible implementation, when the position request includes a target region to be judged; and
the responding to the position request of the designated application according to the designated region to which the position coordinate belongs, comprises:
determining whether the designated region to which the position coordinate belongs is the same region with the target region; and
if the designated region to which the position coordinate belongs is the same region with the target region, returning a judgment confirmation message to the designated application.

In conjunction with the first aspect of the embodiments of the present disclosure, in a fourth possible implementation, the method further comprises:
receiving an update instruction for updating the corresponding relationships between position coordinate ranges and designated regions, and updating the corresponding relationships between position coordinate ranges and respective designated regions according to the update instruction.

According to a second aspect of embodiments of the present disclosure, there is provided an apparatus for determining a position, comprising:
an acquisition module configured to detect a position request of a designated application is detected, and acquire a local position coordinate through a positioning function;
an querying module configured to determine a designated region to which the position coordinate acquired by the acquisition module belongs, in pre-stored corresponding relationships between position coordinate ranges and respective designated regions; and
a responding module configured to respond to the position request of the designated application according to the designated region to which the position coordinate belongs obtained by the querying module.

In conjunction with the second aspect of the embodiments of the present disclosure, in a first possible implementation, the querying module is configured to:
identify a range of position coordinates to which the position coordinate acquired by the acquisition module belongs, in pre-stored corresponding relationships between position coordinate ranges and respective designated regions, and determine the designated region to which the position coordinate and which is acquired by the acquisition module belongs according to the identified position coordinate range.

In conjunction with the second aspect of the embodiments of the present disclosure, in a second possible implementation, the responding module comprises:
a first returning unit configured to return the determined designated region to which the position coordinate belongs and which is obtained by the querying module, as a result of the position request of the designated application, to the designated application.

In conjunction with the second aspect of the embodiments of the present disclosure, in a third possible implementation, if the position request includes a target region to be judged,
the responding module comprises:
a determination unit configured to determine whether the designated region to which the position coordinate belongs and which is obtained by the querying module is the same region with the target region; and
a second returning unit configured to, if the designated region to which the position coordinate belongs obtained by the querying module is the same region with the target region, return a judgment confirmation message to the designated application.

In conjunction with the second aspect of the embodiments of the present disclosure, in a fourth possible implementation, the apparatus further comprises:
an update module configured to receive an update instruction for updating the corresponding relationships between position coordinate ranges and designated regions, and update the corresponding relationships between position coordinate ranges and respective designated regions according to the update instruction.

According to a third aspect of embodiments of the present disclosure, there is provided a device for determining a position, comprising:
a processor; and
a memory, configured to store instructions executable by the processor;
wherein the processor is configured to:
   detect a position request of a designated application is detected, and acquire a local position coordinate through a positioning function;
   determine a designated region to which the position coordinate belongs, in pre-stored corresponding relationships between position coordinate ranges and designated regions; and
   respond to the position request of the designated application according to the designated region to which the position coordinate belongs.

Some advantageous effects brought by the technical solutions provided by the embodiments of the present disclosure may include:
when a designated application initiates a position request, a position coordinate is acquired through a positioning function; a designated region to which the position coordinate belongs is queried in pre-stored corresponding relationships between position coordinate ranges and designated regions; and the position request of the designated application is responded according to the designated region to which the position coordinate belongs. As compared with the technology in the related art in which the position coordinate is sent to a third party application to determine a specific position, in the embodiment of the present disclosure, the position request of the designated application may be responded without calling a third party application or accessing a network, thereby improving the efficiency in responding to the position request of the designated application.

In particular, for many applications which request position information, specific position information, for example, NO. XX, XX building, XX block, which corresponds to the local position coordinate, may not be concerned about, but it is only required to determine a geographic region to which the position coordinate belongs, or whether the position coordinate is located in a target region. Through the method of the present disclosure, not only a requirement of an application may be satisfied, but also a position range may be judged quickly in the local without perform a query over a network.

It should be understood that, the general description above and the detailed description below are only exemplary, and do not limit the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig.1 is a flow chart of a method for determining a position according to an exemplary embodiment of the present disclosure;
Fig.2 is a flow chart of a method for determining a position according to an exemplary embodiment of the present disclosure;
Fig.3 is a flow chart of a method for determining a position according to an exemplary embodiment of the present disclosure;
Fig.4 is a flow chart of a method for determining a position according to an exemplary embodiment of the present disclosure;
Fig.5 is a block diagram showing an apparatus for determining a position according to an exemplary embodiment of the present disclosure; and
Fig.6 is a block diagram showing a device for determining a position according to an exemplary embodiment of the present disclosure.

### DETAILED DESCRIPTION

The objects, technical solutions and advantages of the present disclosure may become more clearly, through a further detailed description given hereinafter to embodiments of the disclosure in conjunction with the accompany drawings.

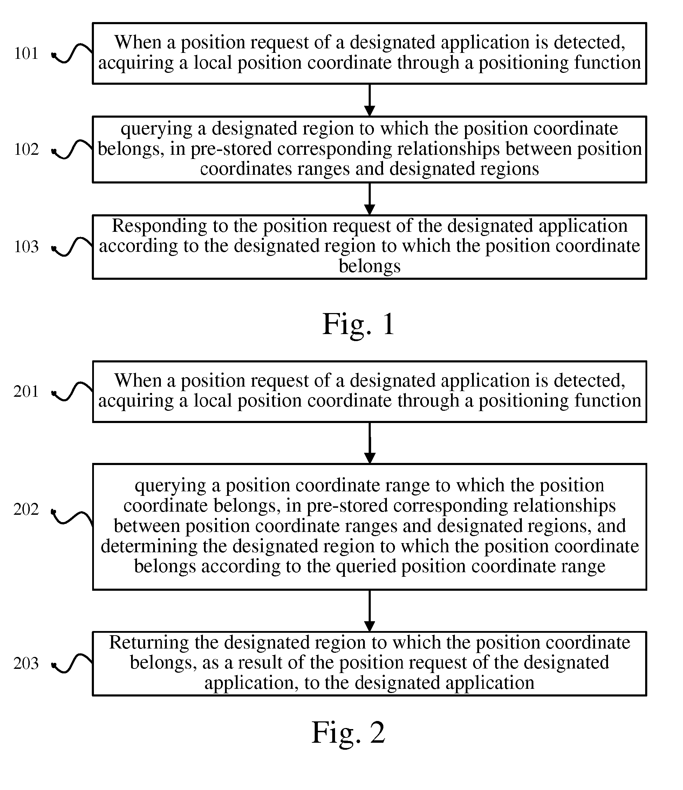

An embodiment of the present disclosure provides a method for determining a position. Referring to Fig.1, the process of the method includes the following steps.

In step 101, when a position request of a designated application is detected, a local position coordinate is acquired through a positioning function; the method of the embodiment is applied in a terminal;
in step 102, a designated region to which the position coordinate belongs is queried, in pre-stored corresponding relationships between position coordinate ranges and designated regions; and the method of the embodiment is applied in a terminal; and
in step 103, the position request of the designated application is responded according to the designated region to which the position coordinate belongs.

In the embodiments of the present disclosure, when a designated application initiates a position request, a position coordinate is acquired through a positioning function; a designated region to which the position coordinate belongs is queried in pre-stored corresponding relationships between position coordinate ranges and designated regions; and the position request of the designated application is responded according to the designated region to which the position coordinate belongs. As compared with the technology in the related art in which the position coordinate is sent to a third party application to determine a specific position, in the embodiment of the present disclosure, the position request of the designated application may be responded without calling a third party application or accessing a network, thereby improving the efficiency in responding to the position request of the designated application.

In exemplary embodiments, for many applications which request position information, specific position information, for example, NO. XX, XX building, XX block, which corresponds to the local position coordinate, may not be concerned about, but it is only required to determine a geographic region to which the position coordinate belongs, or whether the position coordinate is located in a target region. Through the method of the present disclosure, not only a requirement of an application may be satisfied, but also a position range may be judged quickly in the local without perform a query over a network.

An embodiment of the present disclosure provides a method for determining a position. Referring to Fig.2, the process of the method includes the following.

In step 201, when a position request of a designated application is detected, a local position coordinate is acquired through a positioning function. The method of the embodiment is applied in a terminal.

When providing a position-based service for the user, the designated application will send a position request to an operation system. When detecting the position request of the designated application, the operating system will call a positioning module in the terminal to acquire the local position coordinate. Herein, in the embodiment of the present disclosure, the operating system is an android system, and the operating system may monitor operations of each application process, and performs a corresponding process according to the position request of a designated application.

Herein, in the embodiment of the present disclosure, for the position request of the designated application, it is a required to determine a current position of the terminal, that is, a manner of finally responding to the position request of the designated application is achieved by returning a designated region in which the terminal is located to the designated application.

Herein, the manner of acquiring a local position coordinate through a positioning module may include, but not limited to: positioning through a GPS (Global Positioning System) module built in the terminal; positioning through a base station; or positioning through wi-fi (Wireless-Fidelity).

Optionally, the position coordinate may include but not limited to a latitude and longitude coordinate.

Herein, the corresponding relationships between position coordinate ranges and designated regions may be pre-stored in the terminal.

For example, a corresponding relationship between a latitude and longitude coordinate range of Beijing and the Beijing region is stored in the corresponding relationships between position coordinate ranges and designated regions:
bj:[{lat:[40.154237,39.711966],lng:[116.607237,116.099120]}].

Also, a corresponding relationship between a latitude and longitude coordinate range of Taiwan and the Taiwan region may be stored as:
tw:[{lat:[10.123456,12.151213], lng:[120.121212,121.121212]}].

Herein, such a corresponding relationship do not mean that the region represented by the designated region (e.g. Beijing) equals to the region described in the range of position coordinates, but mean that the region described in the position coordinate range belongs to the region represented by the designated region (e.g. Beijing). Only by this manner, the authenticity of the data may be guaranteed.

In step 203, a designated region to which the position coordinate belongs is queried, in pre-stored corresponding relationships between position coordinate ranges and designated regions, and the designated region to which the position coordinate belongs is determined according to the queried range of position coordinates; the method of the embodiment is applied in a terminal.

Herein, after the current position coordinate of the terminal is determined, the position coordinate is queried in respective position coordinate ranges among the corresponding relationships between the position coordinate ranges and the designated regions, the position coordinate range to which the position coordinate belongs is determined.

Optionally, in the corresponding relationships between the position coordinate ranges and the designated regions, a plurality of different designated regions with overlapped position coordinate ranges may exist. For example, in corresponding relationships between the position coordinate ranges and the designated regions, there is a corresponding relationship between a latitude and longitude coordinate range of China and the China region, and also a corresponding relationship between a latitude and longitude coordinate range of Beijing and the Beijing region, wherein the latitude and longitude coordinate range of China completely covers the latitude and longitude coordinate range of Beijing.

Thus, in step 202, the position coordinate is queried in respective position coordinate ranges of the corresponding relationships between the position coordinate ranges and the designated regions, and during a process of determining the position coordinate range to which the position coordinate belongs, optionally, the position coordinate range that is firstly matched is taken as the query result of the position coordinate range currently queried.

Further, the designated region corresponding to the queried position coordinate range is determined in the corresponding relationships between the position coordinate ranges and the designated regions, according to the queried position coordinate range in the query result.

In step 203, the designated region to which the position coordinate belongs is returned to the designated application, as a result of the position request of the designated application; and the method of the embodiment is applied in a terminal.

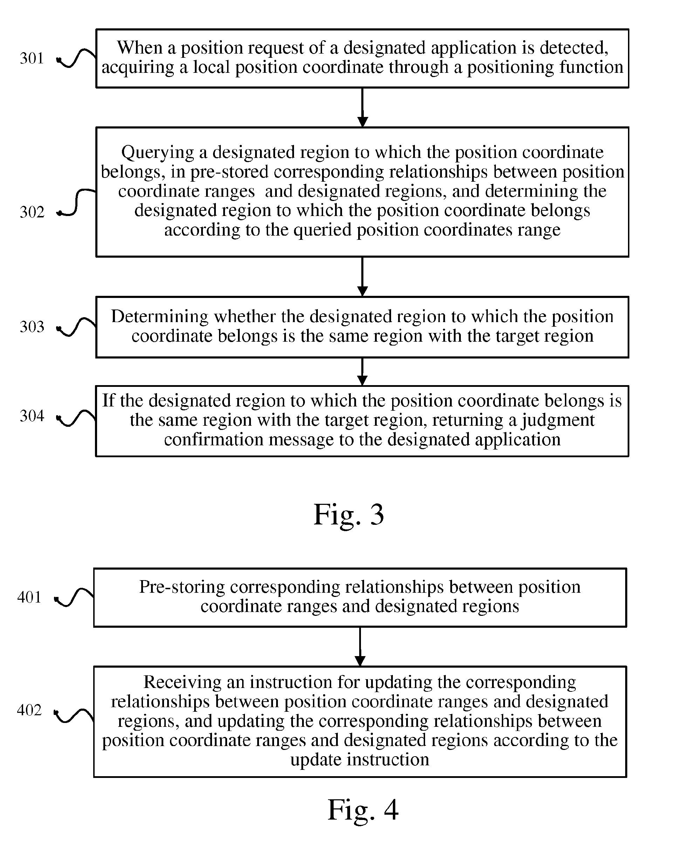

Further, an embodiment of the present disclosure provides another method for determining a position. Referring to Fig.3, the process of the method includes the following steps.

In step 301, when a position request of a designated application is detected, a local position coordinate is acquired through a positioning function; and the method of the embodiment is applied in a terminal.

When providing a position-based service for the user, the designated application will send a position request to an operation system. When detecting the position request from the designated application, the operating system will call a positioning module in the terminal to acquire the local position coordinate.

Herein, in the embodiment of the present disclosure, for the position request of the designated application, it is required to judge whether the current region of the terminal is identical to a target region designated in the designated application, and finally, a manner of responding to the position request of the designated application is achieved by returning a judge result to the designated application.

Thus, a target region to be judged may be carried in the position request of the designated application.

Herein, the manner of acquiring a local position coordinate through a positioning module may include, but not limited to: positioning through a GPS (Global Positioning System) module built in the terminal; positioning through a base station; or positioning through wi-fi (Wireless-Fidelity).

Optionally, the position coordinate may include, but not limited to, a latitude and longitude coordinate.

Herein, the corresponding relationships between position coordinate ranges and designated regions may be pre-stored in the terminal.

For example, a corresponding relationship between a latitude and longitude coordinate range of Beijing and the Beijing region is stored in the corresponding relationships between position coordinate ranges and designated regions:
bj:[{lat:[40.154237,39.711966], lng:[116.607237,116.099120]}].

Also, a corresponding relationship between a latitude and longitude coordinate range of Taiwan and the Taiwan region may be stored as:
tw:[ {lat:[10.123456,12.151213], lng:[120.121212,121.121212]}].

Herein, such a corresponding relationship do not mean that the region represented by the designated region (e.g. Beijing) is equivalent to the region described in the range of position coordinates, but mean that the region described in the position coordinate range belongs to the region represented by the designated region (e.g. Beijing). Only by this manner, the authenticity of the data may be guaranteed.

In step 302, a designated region to which the position coordinate belongs is queried, in pre-stored corresponding relationships between position coordinate ranges and designated regions, and the designated region to which the position coordinate belongs is determined according to the queried range of position coordinates; and the method of the embodiment is applied in a terminal.

Herein, after the current position coordinate of the terminal is determined, the position coordinate is queried in respective position coordinate ranges among the corresponding relationships between the position coordinate ranges and the designated regions, the position coordinate range to which the position coordinate belongs is determined.

Optionally, in the corresponding relationships between the position coordinate ranges and the designated regions, a plurality of different designated regions with overlapped position coordinate ranges may exist. For example, in corresponding relationships between the position coordinate ranges and the designated regions, there is a corresponding relationship between a latitude and longitude coordinate range of China and the China region, and also a corresponding relationship between a latitude and longitude coordinate range of Beijing and the Beijing region, wherein the latitude and longitude coordinate range of China completely covers the latitude and longitude coordinate range of Beijing.

Thus, in step 302, the position coordinate is queried in respective position coordinate ranges of the corresponding relationships between the position coordinate ranges and the designated regions, and during a process of determining the position coordinate range to which the position coordinate belongs, optionally, the position coordinate range that is firstly matched is taken as the query result of the position coordinate range currently queried.

Further, the designated region corresponding to the queried position coordinate range is determined in the corresponding relationships between the position coordinate ranges and the designated regions, according to the queried position coordinate range in the query result.

In step 303, it is determined whether the designated region to which the position coordinate belongs is the same region with the target region; and the method of the embodiment is applied in a terminal.

Or, in another implementation, the steps 302 to 303 may be replaced by: a range of coordinates of the target region is queried in the pre-stored corresponding relationships between the position coordinate ranges and the designated regions; it is determined whether the position coordinate belongs to the target region by judging whether the position coordinate belongs to the coordinates range of the target region. The method of the embodiment is applied in a terminal.

In step 304, if the designated region to which the position coordinate belongs is the same region with the target region, a judgment confirmation message is returned to the designated application; the method of the embodiment is applied in a terminal.

An application scenario according to embodiments of the present disclosure may be illustrated by the following examples:
when a position coordinate is displayed using a map, a designated application may judge a position of the terminal, and calls a corresponding map application according to a result of the judgment of the position of the terminal, to satisfy special requirements of users with different habits. Then, in selecting a map application, the designated application may issue a position request, wherein a target region corresponding to the mainland region is carried in the position request. In a situation, after the terminal performs the judgments in steps 301 to 305, if the position in which the terminal is located is determined to be the mainland region, a judgment confirmation message is returned to the designated application (that is, a message that the result is true), and then the designated application will call the Baidu map to display the position. In another situation, after the terminal performs the judgments in steps 301 to 305, if the position in which the terminal is located is determined to be not the mainland region, a judgment unconfirmed message is returned to the designated application (that is, a message that the result is false), then the designated application will call the Google map to display the position.

In addition, an embodiment of the present disclosure provides another method for determining a position, as shown in Fig.4. It should be noted that, the corresponding relationships between the position coordinate ranges and the designated regions may be maintained later. A maintenance manner may be that the terminal acquires an update instruction from the server, or that the user manually modifies the corresponding relationships to generate an update instruction.

Herein, the flow of the method includes:
in step 401, corresponding relationships between position coordinate ranges and designated regions are pre-stored; and the method of the embodiment is applied in a terminal; and
in step 402, an instruction for updating the corresponding relationships between position coordinate ranges and designated regions is received, and the corresponding relationships between position coordinate ranges and designated regions are updated according to the update instruction; and the method of the embodiment is applied in a terminal.

Herein, the update instruction may include performing the following operations for the corresponding relationships between position coordinate ranges and designated regions: addition, modification, deletion, or the like.

In the embodiments of the present disclosure, when a designated application initiates a position request, a position coordinate is acquired through a positioning function; a designated region to which the position coordinate belongs is queried in pre-stored corresponding relationships between position coordinate ranges and designated regions; and the position request of the designated application is responded according to the designated region to which the position coordinate belongs. As compared with the technology in the related art in which the position coordinate is sent to a third party application to determine a specific position, in the embodiment of the present disclosure, the position request of the designated application may be responded without calling a third party application or accessing a network, thereby improving the efficiency in responding to the position request of the designated application.

In exemplary embodiments, for many applications which request position information, specific position information, for example, NO. XX, XX building, XX block, which corresponds to the local position coordinate, may not be concerned about, but it is only required to determine a geographic region to which the position coordinate belongs, or whether the position coordinate is located in a target region. Through the method of the present disclosure, not only a requirement of an application may be satisfied, but also a position range may be judged quickly in the local without perform a query over a network.

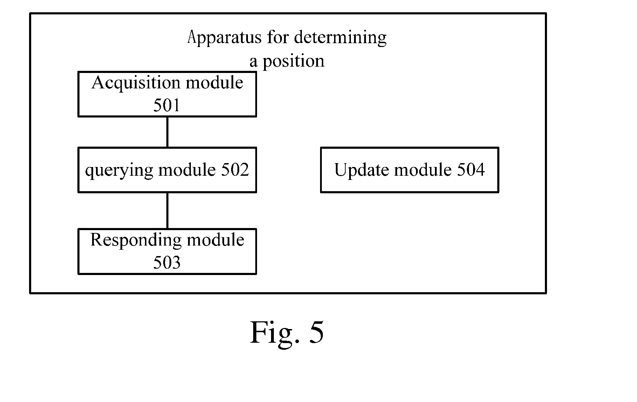

An embodiment of the present disclosure provides an apparatus for determining a position. Referring to Fig.5, the apparatus includes:
an acquisition module 501 configured to, when a position request of a designated application is detected, acquire a local position coordinate through a positioning function;
an querying module 502 configured to query a designated region to which the position coordinate belongs and which is acquired by the acquisition module, in pre-stored corresponding relationships between position coordinate ranges and designated regions; and
a responding module 503 configured to respond to the position request of the designated application according to the designated region to which the position coordinate belongs and which is queried by the querying module 502.

Herein, the querying module 502 is configured to:
query a position coordinate range to which the position coordinate belongs and which is acquired by the acquisition module, in pre-stored corresponding relationships between position coordinate ranges and designated regions, and determine the designated region to which the position coordinate acquired by the acquisition module belongs according to the queried position coordinate range.

Herein, the responding module 503 includes:
a first returning unit configured to return the designated region to which the position coordinate belongs obtained by the querying module, as a result of the position request of the designated application, to the designated application.

Herein, if the position request carries a target region to be judged, the responding module 503 includes:
a determination unit configured to determine whether the designated region to which the position coordinate belongs and which is queried by the querying module is the same region with the target region; and
a second returning unit configured to, if the designated region to which the position coordinate belongs and which is obtained by the querying module is the same region with the target region, return a judgment confirmation message to the designated application.

Herein, the apparatus further includes:
an update module 504 configured to receive an instruction for updating the corresponding relationships between position coordinate ranges and designated regions, and update the corresponding relationships between position coordinate ranges and designated regions according to the update instruction.

In the embodiments of the present disclosure, when a designated application initiates a position request, a position coordinate is acquired through a positioning function; a designated region to which the position coordinate belongs is queried in pre-stored corresponding relationships between position coordinate ranges and designated regions; and the position request of the designated application is responded according to the designated region to which the position coordinate belongs. As compared with the technology in the related art in which the position coordinate is sent to a third party application to determine a specific position, in the embodiment of the present disclosure, the position request of the designated application may be responded without calling a third party application or accessing a network, thereby improving the efficiency in responding to the position request of the designated application.

In exemplary embodiments, for many applications which request position information, specific position information, for example, NO. XX, XX building, XX block, which corresponds to the local position coordinate, may not be concerned about, but it is only required to determine a geographic region to which the position coordinate belongs, or whether the position coordinate is located in a target region. Through the method of the present disclosure, not only a requirement of an application may be satisfied, but also a position range may be judged quickly in the local without perform a query over a network.

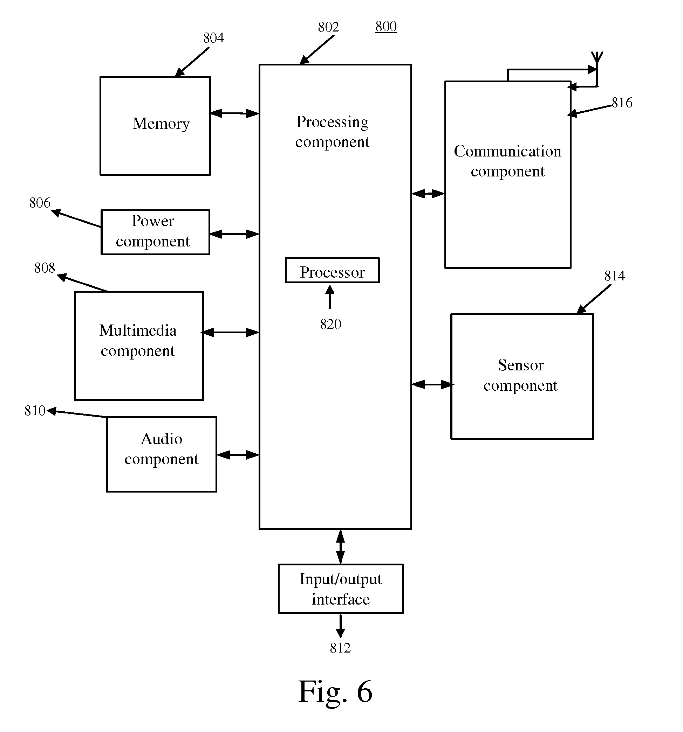

An embodiment of the present disclosure provides a device for determining a position. Fig.6 is a block diagram showing a device 800 for determining a position according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 6, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In order to perform the method for determining a position described in the above, the device according to embodiments of the present disclosure includes:
a processor; and
a memory, configured to store instructions executable by the processor;

Herein the processor is configured to:
when a position request of a designated application is detected, acquire a local position coordinate through a positioning function;
query a designated region to which the position coordinate belongs, in pre-stored corresponding relationships between position coordinate ranges and designated regions; and
respond to the position request of the designated application according to the designated region to which the position coordinate belongs.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium, when instructions stored in the storage medium are executed by a processor of a terminal, the terminal may be caused to be capable of performing a method for determining a position, including:
when a position request of a designated application is detected, acquiring a local position coordinate through a positioning function;
querying a designated region to which the position coordinate belongs, in pre-stored corresponding relationships between position coordinate ranges and designated regions; and
responding to the position request of the designated application according to the designated region to which the position coordinate belongs.

Optionally, the querying a designated region to which the position coordinate belongs, in pre-stored corresponding relationships between position coordinate ranges and designated regions, includes:
querying a position coordinate range to which the position coordinate belongs, in pre-stored corresponding relationships between position coordinate ranges and designated regions, and determining the designated region to which the position coordinate belongs according to the queried range of position coordinates.

Optionally, the responding to the position request of the designated application according to the designated region to which the position coordinate belongs, includes:
returning the designated region to which the position coordinate belongs, as a result of the position request of the designated application, to the designated application.

Optionally, the position request carries a target region to be judged; and
the responding to the position request of the designated application according to the designated region to which the position coordinate belongs, includes:
determining whether the designated region to which the position coordinate belongs is the same region with the target region; and
if the designated region to which the position coordinate belongs is the same region with the target region, returning a judgment confirmation message to the designated application.

Optionally, the method further includes:
receiving an instruction for updating the corresponding relationships between position coordinate ranges and designated regions, and updating the corresponding relationships between position coordinate ranges and designated regions according to the update instruction.

In the embodiments of the present disclosure, when a designated application initiates a position request, a position coordinate is acquired through a positioning function; a designated region to which the position coordinate belongs is queried in pre-stored corresponding relationships between position coordinate ranges and designated regions; and the position request of the designated application is responded according to the designated region to which the position coordinate belongs. As compared with the technology in the related prior art in which the position coordinate is sent to a third party application to determine a specific position, in the embodiment of the present disclosure, the position request of the designated application may be responded without calling a third party application or accessing a network, thereby improving the efficiency in responding to the position request of the designated application.

In exemplary embodiments, for many applications which request position information, specific position information, for example, NO. XX, XX building, XX block, which corresponds to the local position coordinate, may not be concerned about, but it is only required to determine a geographic region to which the position coordinate belongs, or whether the position coordinate is located in a target region. Through the method of the present disclosure, not only a requirement of an application may be satisfied, but also a position range may be judged quickly in the local without perform a query over a network.

The sequence numbers of the above embodiments of the present disclosure are only for description purpose, and do not represent any preference of those embodiments.

It should be understood by those skilled in the art that, all or a part of the steps of the above embodiments may be implemented through hardware, or through a program that instructs a related hardware. The program may be stored on a computer-readable storage medium which may be read-only memory, magnetic or optical disks.

## Claims

1. A method for determining a position, **characterized in that**, the method comprises:
detecting a position request of a designated application, and acquiring (101) a local position coordinate through a positioning function;
determining (102) in pre-stored corresponding relationships between position coordinate ranges and respective designated regions, a designated region to which the position coordinate belongs;
responding (103) to the position request of the designated application according to the determined designated region to which the position coordinate belongs.

2. The method according to claim 1, wherein the determining (102) in pre-stored corresponding relationships between position coordinate ranges and respective designated regions, a designated region to which the position coordinate belongs, comprises:
identifying (202) a range of position coordinates to which the position coordinate belongs in pre-stored corresponding relationships between position coordinate ranges and respective designated regions, and
determining the designated region to which the position coordinate belongs according to the identified range of position coordinates.

3. The method according to claim 1, wherein the responding (103) to the position request of the designated application according to the designated region to which the position coordinate belongs, comprises:
returning (203) the determined designated region to which the position coordinate belongs, as a result of the position request of the designated application, to the designated application.

4. The method according to claim 1, wherein when the position request includes a target region to be judged,
the responding (103) to the position request of the designated application according to the designated region to which the position coordinate belongs, comprises:
determining (303) whether the designated region to which the position coordinate belongs is the same region with the target region; and
if the designated region to which the position coordinate belongs is the same region with the target region, returning (304) a judgment confirmation message to the designated application.

5. The method according to claim 1, further comprising:
receiving an update instruction (402) for updating the corresponding relationships between position coordinate ranges and respective designated regions,;
and updating the corresponding relationships between position coordinate ranges and respective designated regions according to the update instruction.

6. An apparatus for determining a position, the apparatus comprising:
an acquisition module (501) configured to detect a position request of a designated application and acquire a local position coordinate through a positioning function;
an querying module (502) configured to determine a designated region to which the position coordinate acquired by the acquisition module belongs, in pre-stored corresponding relationships between position coordinate ranges and respective designated regions; and
a responding module (503) configured to respond to the position request of the designated application according to the designated region to which the position coordinate belongs obtained by the querying module.

7. The apparatus according to claim 6, wherein the querying module (502) is configured to:
identify a range of position coordinates to which the position coordinate belongs and which is acquired by the acquisition module, in pre-stored corresponding relationships between position coordinate ranges and respective designated regions, and determine the designated region to which the position coordinate belongs and which is acquired by the acquisition module according to the identified range of position coordinates.

8. The apparatus according to claim 6, wherein the responding module (503) comprises:
a first returning unit configured to return the determined designated region to which the position coordinate belongs and which is obtained by the querying module, as a result of the position request of the designated application, to the designated application.

9. The apparatus according to claim 6, wherein if the position request includes a target region to be judged,
the responding module (503) comprises:
a determination unit configured to determine whether the designated region to which the position coordinate belongs and which is obtained by the querying module is the same region with the target region; and
a second returning unit configured to, if the designated region to which the position coordinate belongs and which is obtained by the querying module is the same region with the target region, return a judgment confirmation message to the designated application.

10. The apparatus according to claim 6, wherein the apparatus further comprises:
an update module (504) configured to receive an update instruction for updating the corresponding relationships between position coordinate ranges and respective designated regions, and update the corresponding relationships between position coordinate ranges and designated regions according to the update instruction.

11. A terminal, **characterized in that**, the terminal comprises:
a processor (820); and
a memory (804), configured to store instructions executable by the processor;
wherein the processor is configured to perform:
detecting a position request of a designated application and acquiring (101) a local position coordinate through a positioning function;
determining (102) a designated region to which the position coordinate belongs, in pre-stored corresponding relationships between position coordinate ranges and respective designated regions; and
responding (103) to the position request of the designated application according to the designated region to which the position coordinate ranges.

12. A computer program which when executing on a processor, performs the method according to any one of claims 1 to 5.

13. The computer program of claim 12, when stored on a computer usable medium.
